# EUROPEAN PATENT APPLICATION

(11) **EP 2 200 221 A1**
(43) Date of publication of application: **23.06.2010**
(21) Application number: 07855846.7
(22) Date of filing: 27.12.2007
(51) Int. Cl.: H04L 12/24

(54) **INFORMING METHOD FOR DETERMINING WHETHER STARTING SIGNALING FREE MOVING MECHANISM OR NOT**

(30) Priority: 31.08.2007 CN 200710145718
(71) Applicant: ZTE Corporation, Shenzhen, Guangdong 518057 (CN)
(72) Inventor: ZHU, Jinguo, Guangdong 518057 (CN); SUN, Yang, Guangdong 518057 (CN); FANG, Min, Guangdong 518057 (CN)
(74) Representative: Ilgart, Jean-Christophe
(86) International application number: PCT/CN2007/003845
(87) International publication number: WO 2009/026763

(57) **Abstract**

A method for informing whether to activate Signaling Free Mode mechanism is disclosed by the present invention. The method includes the following: a judging unit judges whether to activate the Signaling Free Mode mechanism; the judging unit informs the judging result to a Serving GW and a UE, via a message sent to the Serving GW and the UE carrying a whether-to-activate sign. The present invention can easily activate and cancel the Signaling Free Mode mechanism, and can easily inform the Serving GW and the UE whether to activate the Signaling Free Mode mechanism.

## Description

### Filed of the Invention

The present invention relates to communication field, in particular to a method for informing whether to activate Signaling Free Mode mechanism.

### Background of the Invention

With the rapid development of the World Interoperability for Microwave Access (Wimax for short), the 3^{rd} generation mobile telecommunication system shall improve the network performance and reduce the network construction and operating costs, in order to maintain its strong competitive force in the mobile telecommunication field. Thus, the standardization working group of the 3^{rd} Generation Partnership Project (3GPP for short) is now concentrating on studying the evolution of the Packet Switch Core (PS Core for short) and the Universal Mobile Telecommunication System Radio Access Network (UTRAN for short). The subject currently studied is entitled as the System Architecture Evolution (SAE for short), which aims at enabling the Evolved PS Core (E-PS Core for short) to provide higher transmission rate, shorter transmission delay, optimal packaging, and to support the mobility management among the Evolved UTRAN (E-UTRAN for short), the UTRAN, the Wireless Local Area Network (WLAN for short) and other non-3GPP access networks.

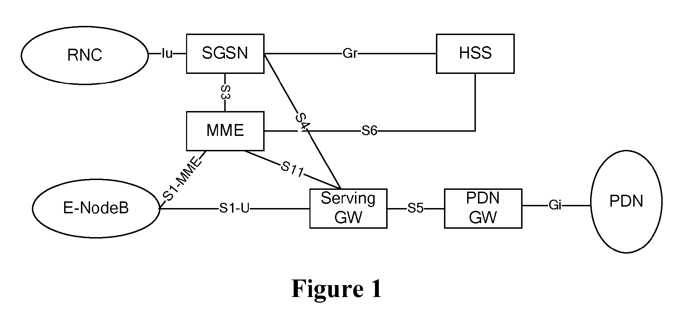

As shown in Fig. 1, the current SAE architecture comprises the following network elements:

An Evolved Radio Access Network (E-RAN for short) is capable of providing higher uplink and downlink rates, lower transmission delay, and more reliable wireless transmission. The network element included in the E-RAN is the eNodeB (Evolved NodeB) for providing radio resources for the access of User Equipments (UEs).

A Home Subscriber Server (HSS for short) is used for permanently storing the user subscription information.

A Packet Data Network (PDN for short) is the network providing services for users.

An E-Packet Core is used for providing lower delay, and allows the access of more radio access systems. It includes the following network elements:

A Mobility Management Entity (MME for short) which is a control plane functional entity and a server for temporarily storing the user data, responsible for managing and storing the User Equipment (UE for short) context (e.g. the UE/user identification, the mobility management status, and the user security parameters, etc), assigning temporary identifications for the users, and processing all non-access-layer messages between the MME and the UE when the UE resides in the tracking area or it is responsible for performing the authentication for the UE; and triggering the paging in the SAE.

A Serving Gateway (Serving GW for short) which is a user plane entity, responsible for the routing process of the user plane data, terminating the downlink data of the UE in the idle state, and managing and storing the SAE bearer context of the UE, such as IP bearer service parameters and network interior routing information, etc. It is the interior user plane anchor point of the 3GPP system, wherein one user can only have one Serving GW at one moment.

A PDN GW which is a gateway responsible for the access of a UE to PDN, is used for assigning user IP addresses, and is the mobility anchor point for the 3GPP and the non-3GPP access systems. A UE can access a plurality of PDN GWs at the same time.

Physically, the Serving GW and the PDN GW can be combined as one.

The SAE system also allows a user to access from the traditional Universal Mobile Telecommunication System (UMTS for short). The Serving General Packet Radio Service, GPRS, Support Node (SGSN for short) in the traditional UMTS can be accessed to the Serving GW, and at this time, the Serving GW is the user plane anchor point in the UMTS and the SAE. Further, there is an interface S3 between the SGSN and the MME which provides a function similar to that of an interface between the SGSNs in the UMTS system.

Whether in the UMTS or in the SAE, there are three states for the UE: the detach state, the idle state, and the connection state. In the detach state, the current position information of the UE is not known by the network; in the idle state, there is no any connection between the UE and the network, however, the current position information of the UE is known by the network, wherein the position is identified by the routing area in the UMTS while by the tracking area in the SAE; and in the connection state, there is a connection between the UE and the network, and the UE may receive and send data on the existing connection.

In the area covered by both the SAE system and the UMTS system, when the UE is in the idle state, the UE may repeatedly select an access technique from the two systems according to the signal intensity, and then initiates a registration to the corresponding access system, which will result in a mass of air signaling. At present, a currently studied technique called the Signaling Free Mode aims at avoiding or reducing sending the registration messages when the UE repeatedly changes the access techniques so as to reduce the air signaling. The principle of this technique is to allow the UE to be registered in the SAE and the UMTS systems simultaneously, such that, when selecting either of the access systems, the UE judges that the routing area or the tracking area to which it belongs has already been registered so as not to initiate any registration or update process, and thereby, the air signaling is reduced.

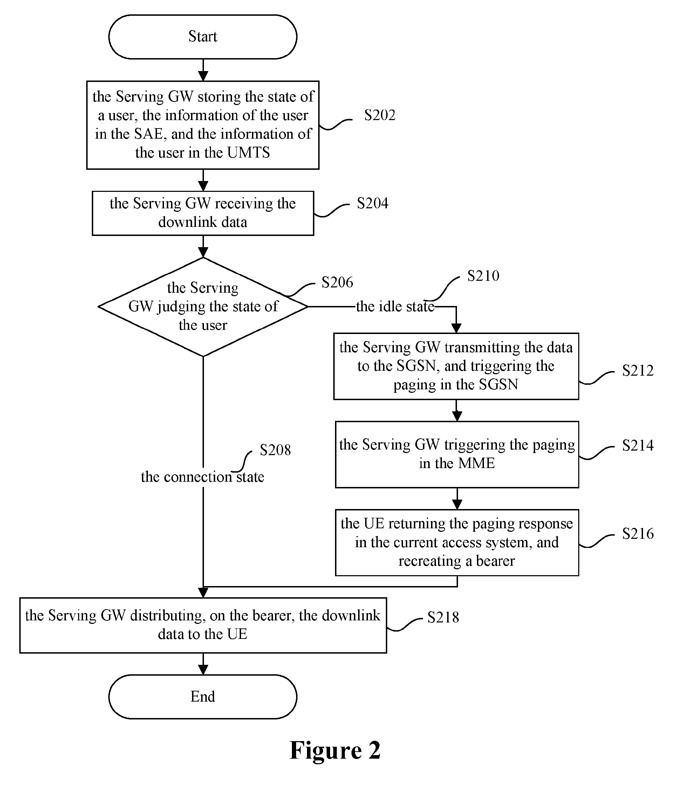

When the UE is in the idle state, since the access system may be changed while no registration or update process is initiated, it is possible that the core network do not know which access system the UE is currently in. Thus, if downlink data arrives, paging shall be simultaneously carried out in both systems. As mentioned above, the Serving GW is the user plane anchor point of the UMTS and the SAE systems, and is used for terminating the downlink data of the UE which is in the idle state. The initiation of paging is shown in Fig. 2, comprising the following steps:

Step S202, when activating the signaling free mode, the Serving GW knows the state of a user, and stores the relevant information of the user in both access systems, such as the user plane tunnel information to the SGSN, and the MME address information registered by the user.

Step S204, the downlink data arrives at the Serving GW.

Step S206, the Serving GW judges the state of the user.

Step S208, if the user is in the connection state, the Serving GW has established a bearer from the current access system to the user; otherwise, turn to Step S218.

Step S210, if the user is in the idle state, the Serving GW does not know which system the user is in, since the user may select one access system without informing the network, thus, paging must be simultaneously conducted in both systems.

Step S212, the Serving GW informs the MME to initiate the paging in the SAE.

Step S214, the Serving GW transmits the downlink data to the SGSN, and triggers the SGSN to activate the paging in the UMTS.

Step S216, the UE returns a paging response after receiving the paging in the current access system, establishes a bearer, and turns to the connection mode.

Step S218, the Serving GW transmits the data from the bearer downwards to the UE.

Thus, if the Signaling Free Mode mechanism is activated, the Serving GW needs to keep the relevant information of the UE in both access systems simultaneously, if the Signaling Free Mode mechanism is not activated, the Serving GW only needs to establish a bearer to the current system, and removes the relevant information of the user in the original system or set the information as invalid. Thus, when establishing a bearer, the Serving GW must know whether the Signaling Free Mode mechanism is activated.

In addition, for the UE, it is also necessary to know whether the Signaling Free Mode mechanism is activated. If yes, it is required to set both systems in an idle state, and at the same time, maintain the registered routing area and tracking area, such that it is not necessary to reactivate the registration or the update procedure upon selecting an access system, if not, the UE must set the other system as unregistered, such that the UE activates a new registration or update process upon selecting the other system.

However, at present, there is not a method for informing the UE and the Serving GW of the information of whether the Signaling Free Mode mechanism shall be activated.

### Summary of the Invention

In view of the above mentioned one or more problems, the present invention provides a method for informing whether to activate the Signaling Free Mode mechanism.

A method for informing whether to activate the Signaling Free Mode mechanism according to the present invention includes the following steps: step S302, a judging unit judges whether to activate the Signaling Free Mode mechanism; step S304, the judging unit informs, the judging result to a Serving GW and a UE, via a message sent to the Serving GW and the UE carrying a sign whether-to-activate signal.

Wherein, the judging unit may be a SGSN in the UMTS or a MME in the SAE. The judging unit may judge whether to activate the Signaling Free Mode mechanism, according to the capability of the UE, the capability of the judging unit, and other criteria. The SGSN/MME may indicate whether to activate the signaling free mode by a sign in a Packet Data Protocol (PDP for short) context updating request message or in a bearer establishing request message sent to the Serving GW. The SGSN/MME may also indicate not to activate the signaling free by not carrying a sign or by carrying a sign of not to activate the Signaling Free Mode mechanism in a PDP context updating request message or in a bearer establishing request message sent to the Serving GW.

If the MME indicates not to activate or cancel the signaling free mode mechanism, the Serving GW only stores the relevant information of a system currently accessed by the UE, and remove the relevant information of the other access system or set it invalid; if the Signaling Free Mode mechanism is activated, the Serving GW stores the relevant information of two systems accessed by the UE. The information may include the tunnel information from the Serving GW to the SGSN in the UMTS and the address information of the MME in the SAE, and so on.

Wherein, the judging unit may indicate whether to activate the signaling free mode by a sign in the registration or update accepting message sent to the UE. The judging unit may also indicate not to activate the signaling free mode by not carrying a sign or by carrying a sign of not to activate the Signaling Free Mode mechanism in the registration or update accepting message sent to the UE.

If the MME indicates not activating the signaling free mode mechanism, the UE will set the other access system in a separation state, such that, when the UE re-selects the access system, the UE will restart registration or update process. If it is required to activate the signaling free mode mechanism, the UE will set the other access system in an idle state, such that, when the UE re-selects the access system, the UE will not restart a registration or update process as it finds that the current routing area or tracking area has been registered.

The present invention can easily activate and cancel the Signaling Free Mode mechanism, and can easily inform the Serving GW and the UE whether to activate the signaling free mode mechanism.

### Brief Description of the Accompanying Drawings

The drawings herein are used to provide a further understanding of the present invention and constitute a part of this application. Exemplary embodiments of the present invention and the description thereof are used to describe the present invention and shall not be construed as improper limitations on the same. In the accompanying drawings:
Figure 1 is a frame diagram of the SAE in the relevant techniques;
Figure 2 is a flowchart of the process of the Serving GW starting a paging in both systems after receiving downlink data in the Signaling Free Mode mechanism in the relevant techniques;
Figure 3 is a flowchart of the method for informing whether to activate the Signaling Free Mode mechanism according to the embodiments of the present invention;
Figure 4 is a flowchart of the UE firstly registering in the SGSN, and then in the MME, and the MME deciding to activate the signaling free according to the embodiments of the present invention;
Figure 5 is a flowchart of the UE registering in the SGSN and the MME, activating the signaling free mode mechanism, and then moving to another SGSN, and the SGSN deciding to cancel the signaling free mode according to the embodiments of the present invention.

### Detailed Description of the Preferred Embodiments

The embodiments of the present invention will be described hereinafter in detail in conjunction with the drawings thereof.

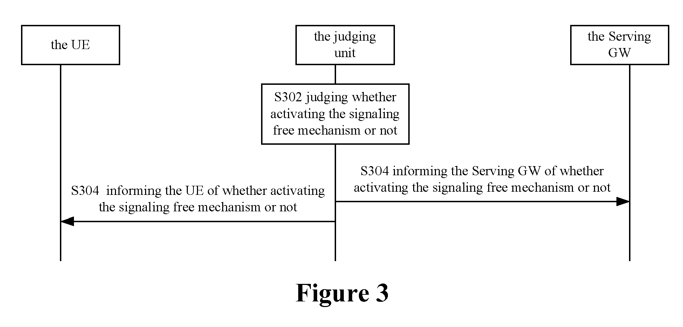

The method for informing whether to activate the Signaling Free Mode mechanism according to the embodiments of the present invention is described with reference to Figure 3. As shown in Figure 3, the method for informing comprises the following steps: step S302, a judging unit judges whether to activate the Signaling Free Mode mechanism; step S304, the judging unit informs the judging result to a Serving GW and/or a UE via a message sent to the Serving GW and/or the UE that carrying a whether-to-activate sign.

Wherein, the judging unit may be the Serving General Packet Radio Service, GPRS, Support Node in the Universal Mobile Telecommunication System or the Mobility Management Entity in the System Architecture Evolution System. The judging unit informs the judging result to the Serving GW via a Packet Data Protocol context updating request message or a bearer establishing request message sent to the Serving GW carrying the whether-to-activate sign, and informs the judging result to the UE via a registration or update accepting message sent to the UE carrying the whether-to-activate sign.

When it is judged to activate the Signaling Free Mode mechanism, the judging unit carries a start sign in a PDP context updating request message or in a bearer establishing request message. When it is judged not to activate the Signaling Free Mode mechanism, the judging unit does not carry the whether-to-activate sign, or carries a sign of not to activate the Signaling Free Mode mechanism in a PDP context updating request message or in a bearer establishing request message.

When it is judged to activate the Signaling Free Mode mechanism, the judging unit carries a start sign in the registration or update accepting message. When it is judged not to activate the Signaling Free Mode mechanism, the judging unit does not carry the whether-to-activate sign, or carries a sign of not to activate the Signaling Free Mode mechanism in the registration or update accepting message.

When the judging unit judges to activate the Signaling Free Mode mechanism, the Serving GW simultaneously stores the relevant information of a system previously accessed by the UE and the relevant information of a system to be accessed by the UE. When the judging unit judges not to activate the Signaling Free Mode mechanism, the Serving GW only stores the relevant information of the system to be accessed by the UE.

If the judging unit judges to activate the Signaling Free Mode mechanism, the UE sets the state of its previously accessed system as idle; otherwise, the UE sets the state of its previously accessed system as separation.

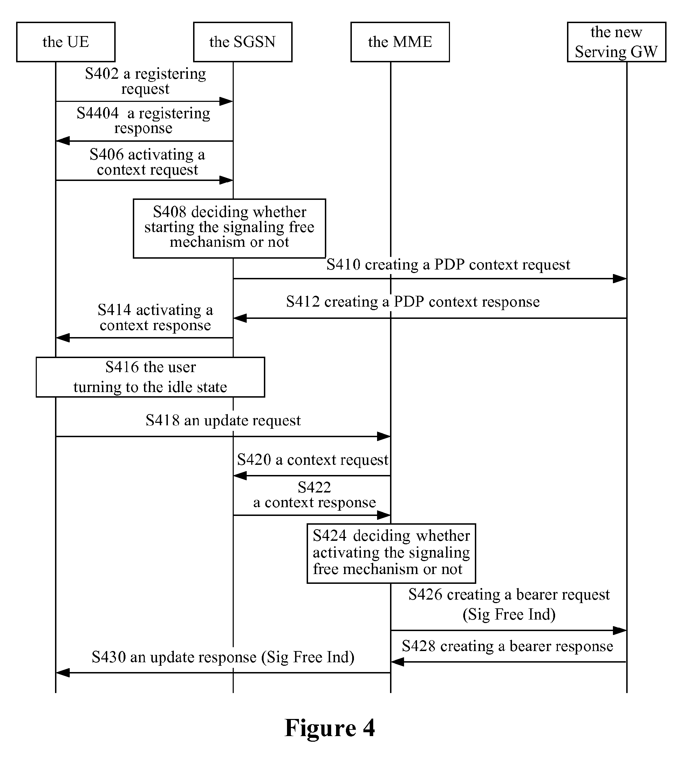

With reference to Figure 4, it is described a process that the UE firstly registers in the SGSN and then in the MME, and the MME decides to activate the signaling free and informs the decision to the Serving GW and the UE. As shown in Figure 4, the process includes the following steps:
Step S402, the UE is powered on from the power off state, and searches and obtains the UMTS signals, and starts a registration process in the SGSN of the UMTS.
Step S404, after the UE successfully registered at the SGSN, the SGSN assigns a temporary user identification for the UE, and carries the temporary user identification, together with a current routing area identification, to the UE in a registration response.
Step S406, the UE initiates a PDP context activating request to the SGSN.
Step S408, the SGSN judges whether to activate the Signaling Free Mode mechanism. The judging criteria include the capability of the UE, the capability of the SGSN, and other criteria. As it is the first registration, it is not necessary to activate the Signaling Free Mode mechanism.
Step S410, after selecting the Serving GW, the SGSN initiates a PDP context establishing request to the Serving GW. This message notifies the Serving GW not to establish the Signaling Free Mode mechanism. The notifying method is, for example: the message carrying a sign indicating not to activate the Signaling Free Mode mechanism, or not carrying any sign indicating to activate the Signaling Free Mode mechanism.
Step S412, after receiving the message, the Serving GW establishes bearer resources to the SGSN by interacting with the PDN GW, and then returns to the SGSN to establish a PDP context response.
Step S414, the MME returns a PDP context activating response to the UE.

Through the above steps, the UE registers in the UMTS, establishes a bearer, and turns to a connection state. Then, the UE can transmit data in the UMTS.

Step S416, after a period of time, the UE turns to an idle state. The UE and the SGSN turn to the idle state. However, the bearer information between the Serving GW and the SGSN is still stored in the SGSN and the Serving GW.

Step S418, during moving in the idle state, the UE decides to register in the SAE by monitoring the radio signals of the SAE and the UMTS. Thus, the UE starts an update process to the MME in the SAE, carrying the latest temporary user identification and routing area identification assigned to the UE by the SGSN.

Step S420, upon the reception, the MME cannot find the user by the temporary user identification. Thus, the MME finds the SGSN that assigned the temporary user identification according to the routing area identification and the temporary user identification, and initiates a user context request to the SGSN.

Step S422, upon the reception, the SGSN finds the user data according to the temporary user identification and the routing area identification, and sends the latest mobility management context and the PDP context of the user to the MME in the context response, in which the IP address of the Serving GW is included.

Step S424, after receiving the context, the MME judges whether to activate the Signaling Free Mode mechanism. The judging criteria include whether the UE has the capability to support the signaling free, whether the MME has the capability to support the signaling free, whether the SGSN has the capability to support signaling free and other criteria. If the UE, the SGSN, and the MME all support the Signaling Free Mode mechanism, and if the Serving GW does not need to be changed, the MME decides to activate the Signaling Free Mode mechanism.

Step S426, the MME sends, to the Serving GW, a bearer updating request message carrying a sign indicating that the signaling free needs to be established.

Step S428, upon receiving the indication that the signaling free needs to be established from the MME, the Serving GW maintains the tunnel to the SGSN, simultaneously assigns the bearer resources in the SAE, and returns a response message to the MME, such that the user plane resources to the UMTS and the SAE are simultaneously established in the Serving GW.

Step S430, the MME returns an update response to the UE. The message carries a sign indicating that the Signaling Free Mode mechanism has been activated. Thus, the UE holds the state of the UMTS in the idle state.

Through the above process, the UE is registered in the SAE and the UMTS simultaneously. Moreover, the tunnel information to the SGSN and the relevant information of the UE in the MME are simultaneously stored in the Serving GW, such that the Signaling Free Mode mechanism is established.

In the above mentioned steps, some processes irrelative to the present invention are ignored, such as the authentication and security process, the interaction process between the Serving GW and the PDN GW, and the process of establishing the air resources and so on.

Regarding the process of firstly registering in the MME and then in the UMTS, it is similar to the process illustrated in Figure 4 and can be easily inferred.

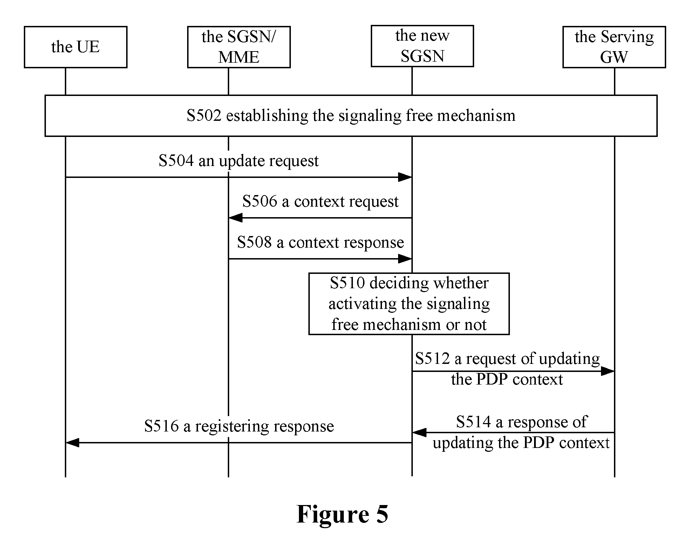

With reference to Figure 5, it is described a process during which the UE registers in the SGSN and the MME, activates the Signaling Free Mode mechanism, and then moves to another SGSN for registration, and during which the new SGSN decides not to activate the Signaling Free Mode mechanism and informs the decision to the UE. As shown in Figure 5, the process includes the following steps:
Step S502, the UE is registered in the SGSN and the MME simultaneously and the Signaling Free Mode mechanism is activated. The UE turns to the idle state, and stores the temporary user identification and the routing area identification assigned by the SGSN, and the temporary user identification and the tracking area identification assigned by the MME, wherein the UE knows which one has been assigned most recently. The Serving GW simultaneously stores the tunnel information to the SGSN in the UMTS and the address information of the MME registered in the SAE by the UE.
Step S504, during moving in the idle state, the UE finds, by monitoring the radio signals, that registration shall be made in a new routing area. This routing area is managed by a new SGSN. Thus, the UE starts an update request to the new SGSN, carrying the temporary user identification and the routing area identification or the tracking area identification assigned most recently.
Step S506, upon the reception, the new SGSN cannot find the user data through the temporary user identification. Then, the new SGSN finds the old SGSN or the old MME having assigned the temporary user identification according to the temporary user identification and the routing area or the tracking area identification, and initiates a user context request to the old SGSN or the old MME.
Step S508, upon the reception, the old SGSN or the old MME finds the user data according to the temporary user identification and the routing area or the tracking area identification, and sends the latest mobility management context and the PDP context of the user to the new SGSN in a request context response.
Step S510, after receiving the context, the new SGSN judges whether to activate the Signaling Free Mode mechanism. The judging criteria include whether the UE has the capability to support the signaling free, whether the SGSN has the capability to support the signaling free and other criteria. If the SGSN judges that it does not support the signaling free, the SGSN decides not to activate the Signaling Free Mode mechanism.
Step S512, the new SGSN notifies the Serving GW not to activate the Signaling Free Mode mechanism in a PDP context updating request message sent to the Serving GW. The notifying method is, for example: the message carrying a sign indicating not to activate the Signaling Free Mode mechanism, or without carrying any sign of signaling free when the SGSN does not support the judgment of step S510.
Step S514, upon the reception, the Serving GW finds that the SGSN indicates not to establish the signaling free. Then, the Serving GW removes the information of the user in the SAE or set the information as invalid, updates the user plane resources in the UMTS at the same time, and returns to the new SGSN an update PDP context response, such that only the user plane information to the UMTS is maintained in the Serving GW.
Step S516, the new SGSN returns an update response message to the UE, notifies the UE not to activate the Signaling Free Mode mechanism. The notifying method is, for example: the message carrying a sign indicating not to activate the Signaling Free Mode mechanism, or without carrying any sign of signaling free when the SGSN does not support the judgment of step S510, and then, the UE changes the state in the SAE to be the separation state.

Through the above mentioned steps, the Serving GW only has the tunnel to the SGSN, the UE only registers in the UMTS, such that the new SGSN cancels the mechanism.

According to the above embodiments, it can be seen that, with the present invention, the network can easily activate and cancel the Signaling Free Mode mechanism, and can easily inform the Serving GW and the UE of whether to activate the Signaling Free Mode mechanism.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all concluded in the scope of the claims of the present invention.

## Claims

1. A method for informing whether to activate Signaling Free Mode mechanism, **characterized by**, comprising the following:
judging, by a judging unit, whether to activate the Signaling Free Mode mechanism;
informing, by the judging unit, the judging result to a Serving gateway, GW, and a User Equipment, UE, via a message sent to the Serving GW and the UE carrying a whether-to-activate sign.

2. The method for informing according to Claim 1, **characterized in that,** the judging unit is a Serving General Packet Radio Service, GPRS, Support Node in the Universal Mobile Telecommunication System or a Mobility Management Entity in the System Architecture Evolution System.

3. The method for informing according to Claim 2, **characterized in that,** the judging unit informs the judging result to the Serving GW via a Packet Data Protocol, PDP, context updating request message or a bearer establishing request message sent to the Serving GW carrying the whether-to-activate sign, and informs the judging result to the UE via a registration or update accepting message sent to the UE carrying the whether-to-activate.

4. The method for informing according to Claim 3, **characterized in that,** when it is judged to activate the Signaling Free Mode mechanism, the judging unit carries a start sign in the PDP context updating request message or in the bearer establishing request message.

5. The method for informing according to Claim 3, **characterized in that,** when it is judged not to activate the Signaling Free Mode mechanism, the judging unit does not carry the whether-to-activate sign or carries a sign of not to activate the Signaling Free Mode mechanism in the PDP context updating request message or in the bearer establishing request message.

6. The informing method for informing according to Claim 3, **characterized in that,** when it is judged to activate the Signaling Free Mode mechanism, the judging unit carries a activate sign in the registration or update accepting message.

7. The method for informing according to Claim 3, **characterized in that,** when it is judged not to activate the Signaling Free Mode mechanism, the judging unit does not carry the whether-to-activate sign or carries a sign of not to activate the Signaling Free Mode mechanism in the registration or update accepting message.

8. The method for informing according to any of Claims 1-7, **characterized in that,** when the judging unit judges to activate the Signaling Free Mode mechanism, the Serving GW simultaneously stores the relevant information of a system previously accessed by the UE and the relevant information of a system to be accessed by the UE.

9. The method for informing according to Claim 8, **characterized in that,** when the judging unit judges not to activate the Signaling Free Mode mechanism, the Serving GW only stores the relevant information of the system to be accessed by the UE.

10. The method for informing according to Claim 9, **characterized in that,** if the judging unit judges to activate the Signaling Free Mode mechanism, the UE sets the state of its previously accessed system as idle; otherwise, the UE sets the state of its previously accessed system as separation.
